# EUROPÄISCHE PATENTSCHRIFT

(11) **EP 1 706 298 B1**
(45) Veröffentlichungstag und Bekanntmachung des Hinweises auf die Patenterteilung: **21.09.2011**
(21) Anmeldenummer: 04821181.7
(22) Anmeldetag: 29.10.2004
(51) Int. Cl.: F16D 51/50, F16D 65/27, F16D 65/14

(54) **ELEKTROMECHANISCH BETÄTIGBARE FESTSTELLBREMSE**
ELECTROMECHANICALLY ACTUATED PARKING BRAKE
FREIN DE STATIONNEMENT ACTIVE DE MANIERE ELECTROMECANIQUE

(30) Priorität: 21.01.2004 DE 102004003248; 29.04.2004 DE 102004021284; 08.10.2004 DE 102004049434
(43) Veröffentlichungstag der Anmeldung: 04.10.2006
(73) Patentinhaber: Continental Teves AG & Co. oHG, 60488 Frankfurt am Main (DE)
(72) Erfinder: LINHOFF, Paul, 61267 Neu-Anspach (DE); THIESING, Jochen, 55252 Mainz-Kastel (DE); BALZ, Jürgen, 65510 Hünstetten-Oberlibbach (DE); RÜCK, Enrico, 04425 Taucha (DE); ATTAYEBI, Samir, 60326 Frankfurt am Main (DE); VÖLKEL, Jürgen, 60486 Frankfurt am Main (DE); WEILER, Rolf, 65817 Eppstein (DE)
(86) Internationale Anmeldenummer: PCT/EP2004/052735
(87) Internationale Veröffentlichungsnummer: WO 2005/070736

(56) Entgegenhaltungen:
- WO-A-2004/059189
- US-A- 4 928 543
- US-A1- 2002 084 153

## Beschreibung

Die vorliegende Erfindung betrifft eine elektromechanisch betätigbare Feststellbremse für Kraftfahrzeuge, die als eine Trommelbremse vom Typ "Duo-Servo" ausgeführt ist, mit einem von an einem Radträger angeordneten elektromechanischen Aktuator betätigbaren, schwimmend gelagerten Spreizschloss, das im wesentlichen durch eine Gewindemutter-Spindel-An-ordnung, deren Gewindemutter vom elektromechanischen Aktuator angetrieben wird, und zwei Druckstücke gebildet ist.

Aus der internationalen Anmeldung WO 2004/059189 A1 ist eine derartige elektromechanisch betätigbare Feststellbremse bekannt. Bei der vorbekannten Feststellbremse wird die schwimmende Lagerung des Spreizschlosses realisiert, indem die Gewindemutter eine Geradverzahnung aufweist, die mit einem Schraubrad ein Schraubradgetriebe bzw. mit einem Zahnrad ein Stirnradgetriebe bildet. Bei einer Aktivierung der Feststellbremse eines an einem Hang abgestellten Kraftfahrzeugs bewegt sich das Kraftfahrzeug etwas in Richtung der Hangabtriebskraft bis die Bremsbacken durch den für Trommelbremsen vom Typ "Duo-Servo" charakteristischen Selbstverstärkungseffekt mit der Bremstrommel und einem radträgerfesten Abstützbock in Eingriff stehen. Bei diesen Setzeffekten tritt ein Verlustweg innerhalb des Spreizschlosses auf, der aufgrund der Steifigkeit der sich im Kraftfluss befindlichen Bauteile zu einen unmittelbaren Verlust der Spreizkraft und damit zu einer Verringerung der Zuspannkraft führt, was zu sicherheitskritischen Situationen führen kann. Außerdem kann es bei der vorbekannten Feststellbremse vorkommen, dass ein Lösevorgang der Feststellbremse nicht mehr möglich ist. Bei einer Abkühlung der zuvor erhitzten Bremstrommel ist diese einem geringen Schrumpfprozess ausgesetzt, wonach sich die Zuspannkraft aufgrund der bereits erwähnten großen Steifigkeit der sich im Kraftfluss befindlichen Bauteile erhöht. Durch die eben beschriebene Erhöhung der Zuspannkraft ist es möglich, dass ein Lösevorgang der Feststellbremse nicht durchgeführt werden kann, was als nachteilig anzusehen ist.

Dokument US 4 928 543 offenbart eine Feststellbremse gemäß dem Oberbegriff des Anspruchs 1.

Es ist daher Aufgabe der Erfindung, eine elektromechanisch betätigbare Feststellbremse der eingangs genannten Gattung dahingehend zu verbessern, dass die eingestellte Zuspannkraft während eines Feststellbremsvorganges unabhängig von äußeren Einflüssen zuverlässig erhalten bleibt.

Diese Aufgabe wird erfindungsgemäß dadurch gelöst, dass im Kraftfluss zwischen der Gewindemutter-Spindel-Anordnung und mindestens einem der Druckstücke mindestens ein Federelement vorgesehen ist.

Zur Konkretisierung des Erfindungsgegenstandes ist vorgesehen, dass das Federelement zwischen dem Druckstück und einem mit der Gewindemutter zusammenwirkenden Druckring angeordnet ist.

Bei einer besonders vorteilhaften Weiterbildung des Erfindungsgegenstandes ist vorgesehen, dass eine axiale Lagerung der Gewindemutter im Gehäuse des Spreizschlosses vorgesehen ist.

Dabei wird die axiale Lagerung durch ein Kalottenlager realisiert, das entweder durch eine Kugel und eine Kugelpfanne oder durch ein kalottenförmiges Bauteil und ein konkaves Lagerteil gebildet wird. Das konkave Lagerteil weist eine axiale Verlängerung auf, die in eine Sackbohrung der Spindel hineinragt.

Es ist vorgesehen, dass sich die Gewindemutter über das Federelement, den Druckring und das Kalottenlager an dem Druckstück abstützt.

Bei einer besonders vorteilhaften Ausführungsform des Erfindungsgegenstandes bilden das Druckstück, das Federelement und der Druckring eine selbstständig handhabbare Baugruppe.

Eine weitere vorteilhafte Ausführung sieht vor, dass das Federelement durch mindestens eine Tellerfeder gebildet wird.

Die Erfindung wird nachfolgend anhand von zwei Ausführungsbeispielen im Zusammenhang mit der beiliegenden Zeichnung näher erläutert. In der Zeichnung zeigen:
- Fig. 1: eine vereinfachte Darstellung einer ersten Aus- führung der erfindungsgemäßen Feststellbremse,
- Fig. 2: eine Schnittdarstellung eines Spreizschlosses, das in der in Fig. 1 dargestellten Feststellbrem- se einsetzbar ist,
- Fig. 3: eine zweite Ausführung des in Fig. 2 dargestell- ten Spreizschlosses in Schnittdarstellung.

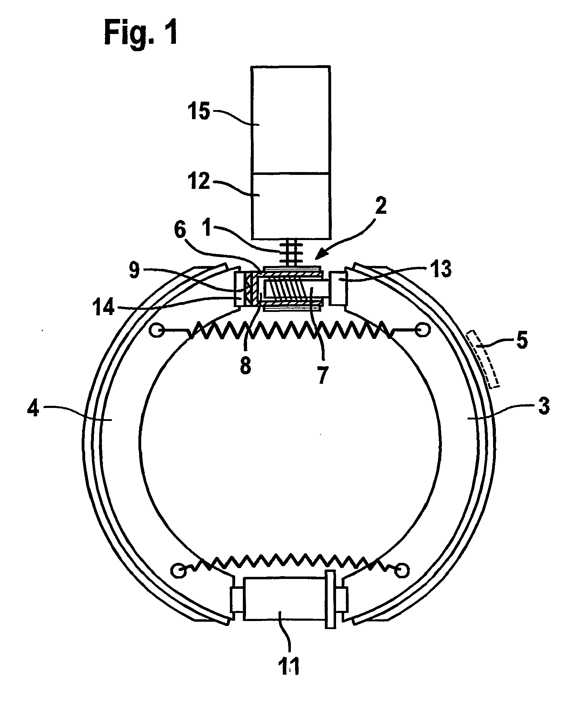

Die in Fig. 1 dargestellte elektromechanisch betätigbare Feststellbremse besteht im wesentlichen aus einer an sich bekannten Trommelbremse vom Typ "Duo-Servo", sowie einem elektromechanischen Aktuator 15. Die Trommelbremse vom Typ "Duo-Servo" weist eine lediglich teilweise dargestellte Bremstrommel 5, ein mit Reibflächen versehenes Paar von Bremsbacken 3, 4 und ein Spreizschloss 2 auf, das die Reibflächen der Bremsbacken 3, 4 mit der Innenseite der Bremstrommel 5 in Eingriff bringen kann. Charakteristisch für die Trommelbremse vom Typ "Duo-Servo" ist eine frei bewegliche bzw. schwimmend gelagerte Abstützvorrichtung 11, die dem Spreizschloss 2 gegenüber liegt und zwischen den Bremsbacken 3, 4 angeordnet ist. Außerdem ist die Abstützvorrichtung 11 mit einer Nachstellvorrichtung kombiniert.

Das eben erwähnte Spreizschloss 2 wird im wesentlichen durch eine Gewindemutter-Spindel-Anordnung 8 und zwei Druckstücke 13, 14 gebildet, wobei das eine Druckstück 13 mit der Spindel 7 und das andere Druckstück 14 mit der Gewindemutter 6 zusammenwirkt. Wie in Fig. 1 verdeutlicht ist, wird die Gewindemutter-Spindel-Anordnung 8 von einem Schraubrad 1 betätigt, das vom elektromechanischen Aktuator 15 über ein nicht näher beschriebenes Untersetzungsgetriebe 12 angetrieben wird. Zu diesem Zweck weist die Gewindemutter 6 auf der äußeren Oberfläche eine Verzahnung auf, die parallel zur Achse der Gewindemutter 6 verläuft. Mit dieser Geradverzahnung der Gewindemutter 6 bildet das eben erwähnte Schraubrad 1 ein Schraubradgetriebe. Bei einer Betätigung des Schraubrads 1 durch den elektromechanischen Aktuator 15 wird die Gewindemutter 6 in eine Rotationsbewegung versetzt. Aufgrund dieser Rotationsbewegung der Gewindemutter 6 vollzieht die Spindel 7 der Gewindemutter-Spindel-Anordnung 8 eine Translationsbewegung und bringt die beiden Bremsbacken 3, 4 mit der gewünschten Zuspannkraft mit der Bremstrommel 5 in Eingriff.

Um einen Feststellbremsvorgang durchführen zu können, ist entweder das Untersetzungsgetriebe 12 oder die Gewindemutter-Spindel-Anordnung 8 selbsthemmend ausgebildet. Durch diese Maßnahme verbleiben die Bremsbacken 3, 4 im stromlosen Zustand des elektromechanischen Aktuators 15 mit der Bremstrommel 5 in Eingriff.

Sofern das Kraftfahrzeug an einem Hang abgestellt wird, erfolgt nach der Einstellung der gewünschten Zuspannkraft, eine geringfügige Bewegung des Kraftfahrzeugs in Richtung der Hangabtriebskraft. Dabei dreht sich auch die Bremstrommel 5 um einen bestimmten Winkelbetrag, bis der für eine Trommelbremse vom Typ "Duo-Servo" charakteristische Selbstverstärkungseffekt einsetzt. Als Folge wird jedoch die gewünschte Zuspannkraft reduziert. Aus diesem Grund ist erfindungsgemäß vorgesehen, dass im Kraftfluss zwischen der Gewindemutter-Spindel-Anordnung 8 und dem mit der Gewindemutter 6 zusammenwirkenden Druckstück 14 ein Federelement 9 angeordnet ist, das die eben beschriebene Reduzierung der gewünschten Zuspannkraft kompensiert. Außerdem ist es möglich, dass ein Lösevorgang der Feststellbremse nicht durchgeführt werden kann, wenn eine Abkühlung der zuvor erhitzten Bremstrommel 5 eintritt. Bei dieser Abkühlung vollzieht die Bremstrommel 5 einen geringen Schrumpfvorgang, wonach sich die Zuspannkraft aufgrund der großen Steifigkeit der sich im Kraftfluss befindlichen Bauteile erhöht. In diesem Fall ist es möglich, dass der elektromechanische Aktuator 15 einen Lösevorgang der Feststellbremse nicht durchführen kann, da die Zuspannkraft zu groß ist und sich die sich im Kraftfluss befindlichen Bauteile verklemmt haben. Durch die eben erwähnte, in Fig. 1 dargestellte, erfindungsgemäße Anordnung wird auch dieser Effekt verhindert.

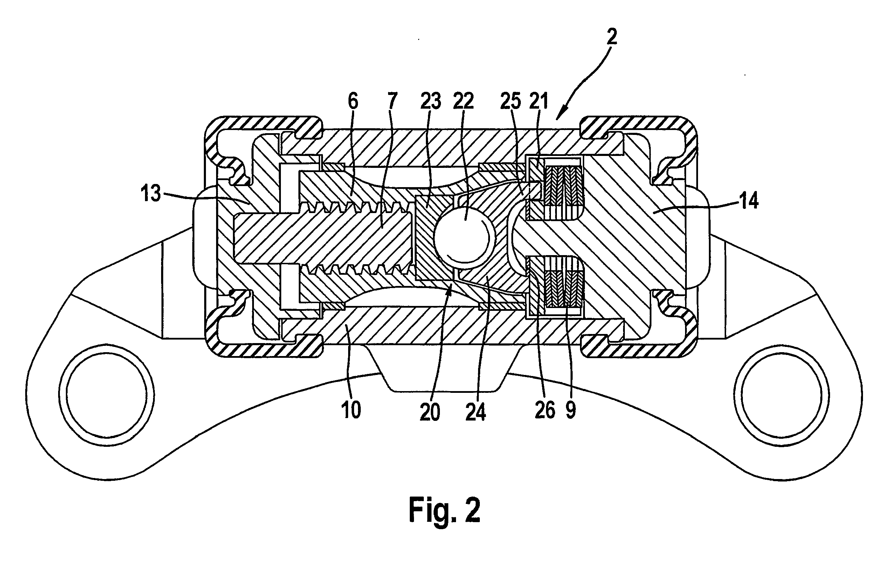

Wie in Fig. 2, in der das Spreizschloss 2 dargestellt ist, ersichtlich, ist das Federelement 9 zwischen dem mit der Gewindemutter 6 zusammenwirkenden Druckstück 14 und einem mit der Gewindemutter 6 zusammenwirkenden Druckring 21 angeordnet. Die Gewindemutter 6 ist in einem Gehäuse 10 des Spreizschlosses 2 mit Hilfe eines Kalottenlagers 20 drehbar gelagert. Die Geradverzahnung auf der äußeren Oberfläche der Gewindemutter 6 ist nicht dargestellt. Sobald der elektromechanische Aktuator das mit der Gewindemutter 6 in Eingriff stehende, nicht dargestellte Schraubrad antreibt, wird die Gewindemutter 6, wie bereits beschrieben, in Rotation versetzt. Dadurch vollzieht die Spindel 7 eine Translationsbewegung in der Zeichnung nach links und drückt das Druckstück 13 in der Zeichnung nach links, wonach die in Fig. 2 nicht dargestellte erste Bremsbacke gegen die nicht dargestellte Bremstrommel gedrückt wird. Die so erzielte Zuspannkraft stützt sich über die Spindel 7, die Gewindemutter 6, das Kalottenlager 20 und über das Federelement 9 auf dem mit der Gewindemutter 6 zusammen wirkenden Druckstück 14 ab. Als Gegenreaktion wird auch die zweite Bremsbacke gegen die Bremstrommel gedrückt und das Spreizschloss 2 zentriert sich selbst innerhalb der Bremstrommel. Bei diesem Vorgang wird das Federelement 9 komprimiert bzw. geladen.

Die axiale Lagerung der Gewindemutter 6 mit Hilfe des eben erwähnten Kalottenlagers 20 ist besonders vorteilhaft, da Querkräfte das Kalottenlager 20 nicht beschädigen können und nicht auf das Gewinde zwischen Gewindemuter 6 und Spindel 7 wirken können, das andernfalls einem großen Verschleiß unterliegen würde. Die eben genannten Querkräfte resultieren im wesentlichen aus einem möglichen Verkippen des Druckstücks 14.

Bei dem in Fig. 2 dargestellten Ausführungsbeispiel, wird das Kalottenlager durch eine Kugel 22 und eine gehärtete Kugelpfanne 23 gebildet, deren Durchmesser unterschiedlich ausgeführt sind. Dadurch sind die Reibmomente vergleichsweise gering. Die eben erwähnte Kugel 22 wird von einer Kugelaufnahme 24, die diese umgreift, gehalten. Die Kugelaufnahme 24 weist auf ihrer der Kugel 22 abgewandten Seite mehrere Finger 25 auf, die in dem bereits erwähnten Druckring 21 gelagert sind und auf diese Weise den Kraftfluss zwischen der Gewindemutter 6 und dem Druckstück 14 über das Kalottenlager 20 und das Federelement 9 herstellen. Außerdem ist aus Fig. 2 ersichtlich, dass das mit der Gewindemutter 6-zusammenwirkende Druckstück 14, das Federelement 9 und der Druckring 21 mit Hilfe einer Scheibe 26 eine selbstständig handhabbare Baugruppe bilden. Alternativ kann die Kugelaufnahme 24 mit der Kugel 22 zur eben erwähnten selbstständig handhabbaren Baugruppe hinzugefügt werden.

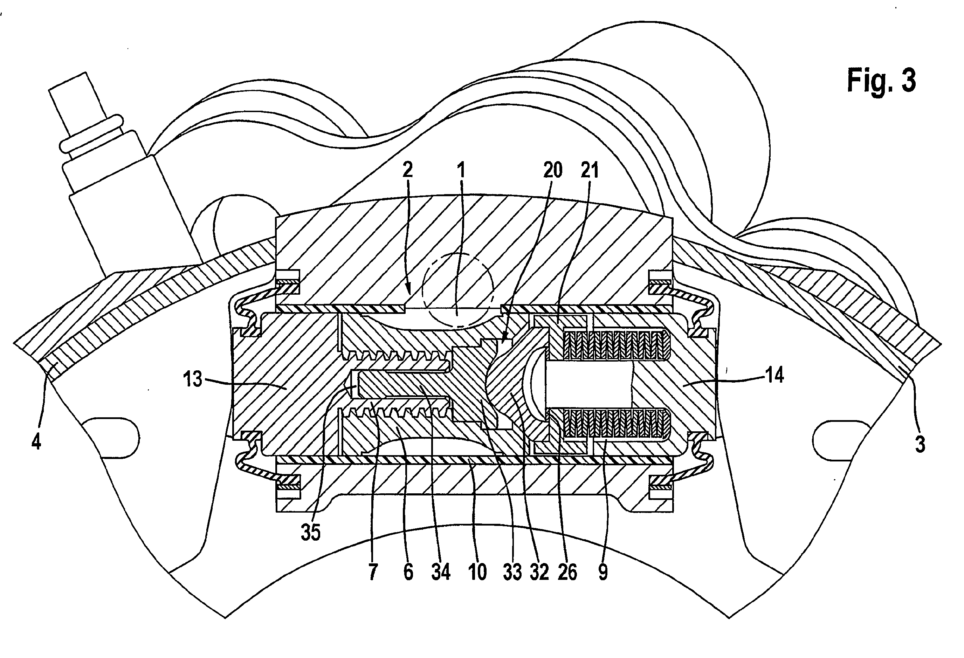

In Fig. 3 ist ein zweites Ausführungsbeispiel des Spreizschlosses 2 dargestellt. In dem Gehäuse 10 des Spreizschlosses 2 sind die Gewindemutter 6 und die Spindel 7, sowie die beiden Druckstücke 13, 14 angeordnet. Wie bereits anhand von Fig. 2 beschrieben, wird die Gewindemutter 6 durch das in Fig. 3 lediglich im Querschnitt angedeutete Schraubrad 1 in Rotation versetzt. Daraufhin vollzieht die Spindel 7 eine Translationsbewegung in der Zeichnung nach links und drückt die Bremsbacke 4 gegen die nicht dargestellte Bremstrommel, worauf als Reaktion auch die gegenüber liegende Bremsbacke 3 zur Anlage an die Innenseite der Bremstrommel gebracht wird. Bei diesem Vorgang zentriert sich das Spreizschloss 2 selbst innerhalb der Bremstrommel und das Federelement 9 wird komprimiert bzw. geladen.

Die axiale Lagerung der Gewindemutter 6 ist bei der in Fig. 3 dargestellten Ausführungsform ebenfalls durch ein Kalottenlager 20 realisiert. Das Kalottenlager 20 ist jedoch im Gegensatz zum in Fig. 2 dargestellten Ausführungsbeispiel durch ein kalottenförmiges Bauteil 32 und ein konkaves Lagerteil 33 gebildet. Dabei ist das konkave Lagerteil 33 fest mit der Gewindemutter 6 verbunden und weist eine axiale Verlängerung 34 auf, die in eine Sackbohrung 35 der Spindel 7 hineinragt. Das kalottenförmige Bauteil 32 ist in den Druckring 21 passend eingefügt und bildet mit diesem sowie mit dem Federelement 9 und dem Druckstück 14 eine selbstständig handhabbare Baugruppe. Zu diesem Zweck bildet das Druckstück 14 eine hutförmige Ausnehmung, in der das Federelement 9 angeordnet ist. In der Mitte der hutförmigen Ausnehmung ist ein Bauteil zur Vernietung der Bauteile vorgesehen.

Vorzugsweise wird bei den bevorzugten Ausführungsformen das Federelement 9 durch eine oder mehrere Tellerfedern gebildet.

## Patentansprüche

1. Elektromechanisch betätigbare Feststellbremse für Kraftfahrzeuge, die als eine Trommelbremse vom Typ "Duo-Servo" ausgeführt ist, mit einem von an einem Radträger angeordneten elektromechanischen Aktuator (15) betätigbaren, schwimmend gelagerten Spreizschloss (2), das im wesentlichen durch eine Gewindemutter-Spindel-Anordnung (8), deren Gewindemutter (6) vom elektromechanischen Aktuator (15) angetrieben wird, und zwei Druckstücke (13, 14) gebildet ist, **dadurch gekennzeichnet, dass** im Kraftfluss zwischen der Gewindemutter-Spindel-Anordnung (8) und mindestens einem der Druckstücke (13, 14) mindestens ein Federelement (9) vorgesehen ist.

2. Elektromechanisch betätigbare Feststellbremse nach Anspruch 1, **dadurch gekennzeichnet, dass** das Federelement (9) zwischen dem Druckstück (14) und einem mit der Gewindemutter (6) zusammenwirkenden Druckring (21) angeordnet ist.

3. Elektromechanisch betätigbare Feststellbremse nach Anspruch 1, **dadurch gekennzeichnet, dass** eine axiale Lagerung der Gewindemutter (6) im Gehäuse (10) des Spreizschlosses (2) vorgesehen ist.

4. Elektromechanisch betätigbare Feststellbremse nach Anspruch 3, **dadurch gekennzeichnet, dass** die axiale Lagerung durch ein Kalottenlager (20) realisiert wird.

5. Elektromechanisch betätigbare Feststellbremse nach Anspruch 4, **dadurch gekennzeichnet, dass** das Kalottenlager (20) durch ein kalottenförmiges Bauteil (32) und ein konkaves Lagerteil (33) gebildet wird, das eine axiale Verlängerung (34) aufweist, die in eine Sackbohrung (35) der Spindel (7) hineinragt.

6. Elektromechanisch betätigbare Feststellbremse nach Anspruch 4, **dadurch gekennzeichnet, dass** das Kalottenlager (20) durch eine Kugel (22) und eine Kugelpfanne (23) gebildet wird.

7. Elektromechanisch betätigbare Feststellbremse nach einem der Ansprüche 4 bis 6, **dadurch gekennzeichnet, dass** sich die Gewindemutter (6) über das Federelement (9), den Druckring (21) und das Kalottenlager (20) an dem Druckstück (14) abstützt.

8. Elektromechanisch betätigbare Feststellbremse nach einem der vorhergehenden Ansprüche 2 bis 7, **dadurch gekennzeichnet, dass** das Druckstück (14), das Federelement (9) und der Druckring (21) eine selbstständig handhabbare Baugruppe bilden.

9. Elektromechanisch betätigbare Feststellbremse nach einem der vorhergehenden Ansprüche, **dadurch gekennzeichnet, dass** das Federelement (9) durch mindestens eine Tellerfeder gebildet wird.

## Claims

1. Electromechanically actuable parking brake for motor vehicles, which parking brake is designed as a "duo servo"-type drum brake, having an expanding lock (2) which is mounted in a floating fashion and which can be actuated by an electromechanical actuator (15) arranged on a wheel carrier and which is formed substantially by a threaded nut-spindle arrangement (8), whose threaded nut (6) is driven by the electromechanical actuator (15), and two thrust pieces (13, 14), **characterized in that** at least one spring element (9) is provided in the force flow between the threaded nut-spindle arrangement (8) and at least one of the thrust pieces (13, 14).

2. Electromechanically actuable parking brake according to Claim 1, **characterized in that** the spring element (9) is arranged between the thrust piece (14) and a thrust ring (21) which interacts with the threaded nut (6).

3. Electromechanically actuable parking brake according to Claim 1, **characterized in that** axial mounting of the threaded nut (6) in the housing (10) of the expanding lock (2) is provided.

4. Electromechanically actuable parking brake according to Claim 3, **characterized in that** the axial mounting is realized by means of a spherical bearing (20).

5. Electromechanically actuable parking brake according to Claim 4, **characterized in that** the spherical bearing (20) is formed by a spherical-cap-shaped component (32) and a concave bearing part (33) which has an axial elongation (34) which projects into a blind bore (35) of the spindle (7).

6. Electromechanically actuable parking brake according to Claim 4, **characterized in that** the spherical bearing (20) is formed by a ball (22) and a ball socket (23).

7. Electromechanically actuable parking brake according to one of Claims 4 to 6, **characterized in that** the threaded nut (6) is supported on the thrust piece (14) via the spring element (9), the thrust ring (21) and the spherical bearing (20).

8. Electromechanically actuable parking brake according to one of the preceding Claims 2 to 7, **characterized in that** the thrust piece (14), the spring element (9) and the thrust ring (21) form an assembly that can be handled independently.

9. Electromechanically actuable parking brake according to one of the preceding claims, **characterized in that** the spring element (9) is formed by at least one plate spring.

## Revendications

1. Frein de stationnement à manoeuvre électromécanique pour des véhicules automobiles, qui est réalisé sous la forme d'un frein à tambour de type « Duo-Servo » avec une serrure à segments extensibles (2) logée de façon flottante, manoeuvrable par un actionneur (15) électromécanique disposé sur un support de roue, qui est essentiellement formée d'un agencement écrou/broche (8), dont l'écrou (6) est entraîné par l'actionneur (15) électromécanique et par deux éléments de pression (13, 14), **caractérisé en ce que** dans le flux de force entre l'agencement écrou/broche (8) et au moins l'un des éléments de pression (13, 14) est prévu au moins un élément à ressort (9).

2. Frein de stationnement à manoeuvre électromécanique selon la revendication 1, **caractérisé en ce que** l'élément à ressort (9) est disposé entre l'élément de pression (14) et une bague de pression (21) coopérant avec l'écrou (6).

3. Frein de stationnement à manoeuvre électromécanique selon la revendication 1, **caractérisé en ce qu'**un appui axial de l'écrou (6) est prévu dans le boîtier (10) de la serrure à segments extensibles (2).

4. Frein de stationnement à manoeuvre électromécanique selon la revendication 3, **caractérisé en ce que** l'appui axial est réalisé par un palier à calotte (20) .

5. Frein de stationnement à manoeuvre électromécanique selon la revendication 4, **caractérisé en ce que** le palier à calotte (20) est formé par un composant en forme de calotte (32) et un élément de palier concave (33) qui présente un prolongement axial (34) qui saillit dans un trou borgne (35) de la broche (7).

6. Frein de stationnement à manoeuvre électromécanique selon la revendication 4, **caractérisé en ce que** le palier à calotte (20) est formé par une sphère (22) et un coussinet sphérique (23).

7. Frein de stationnement à manoeuvre électromécanique selon l'une quelconque des revendications 4 à 6, **caractérisé en ce que** l'écrou (6) s'appuie par l'intermédiaire de l'élément à ressort (9), de la bague de pression (21) et du palier à calotte (20) sur l'élément de pression (14).

8. Frein de stationnement à manoeuvre électromécanique selon l'une quelconque des revendications précédentes 2 à 7, **caractérisé en ce que** l'élément de pression (14), l'élément à ressort (9) et la bague de pression (21) forment un ensemble manipulable de façon indépendante.

9. Frein de stationnement à manoeuvre électromécanique selon l'une quelconque des revendications précédentes, **caractérisé en ce que** l'élément à ressort (9) est formé par au moins une rondelle Belleville.
